# EUROPEAN PATENT SPECIFICATION

(11) **EP 4 347 687 B1**
(45) Date of publication and mention of the grant of the patent: **19.02.2025**
(21) Application number: 22727206.9
(22) Date of filing: 24.05.2022
(51) Int. Cl.: C08G 63/183, C08G 63/199, C08L 69/00, C08J 5/00

(54) **THERMOPLASTIC POLYCARBONATE COMPOSITION**
THERMOPLASTISCHE POLYCARBONATZUSAMMENSETZUNG
COMPOSITION DE POLYCARBONATE THERMOPLASTIQUE

(30) Priority: 31.05.2021 WO PCT/CN2021/097098; 14.06.2021 EP 21179185
(43) Date of publication of application: 10.04.2024
(73) Proprietor: Covestro Deutschland AG, 51373 Leverkusen (DE)
(72) Inventor: WAN, Shun, Shanghai 200333 (CN); GUO, Vivian, Shanghai 200233 (CN)
(74) Representative: Levpat
(86) International application number: PCT/EP2022/063993
(87) International publication number: WO 2022/253628

(56) References cited:
- EP-A1- 2 774 950
- EP-A2- 3 822 319
- WO-A1-2017/149457
- US-A1- 2008 000 917
- US-A1- 2015 232 661

## Description

### TECHNICAL FIELD

The present invention relates to thermoplastic polycarbonate (PC) compositions with a lower odor rank, higher impact strength and good heat resistance, as well as shaped articles made therefrom.

### BACKGROUND ART

Polycarbonate/ABS (Acrylonitrile-Butadiene-Styrene) alloy is widely used for a lot of applications, especially for automotive interior, due to its excellent property combination of lower emission, excellent mold-processing ability, good economic efficiency and strong physical properties such as high impact strength, high heat resistance, good aesthetic and so on.

However, there has been recently a growing appeal from end users in automotive market for low-odor materials to be used in manufacture of automotive interiors. In that case, PC/ABS blends, though generally believed to make less impact on odor of automotive interior than other types of materials including adhesives and leathers, was often requested to improve its odor performance from the perspective of odor control of the whole vehicle system. For this purpose, great efforts since then have been made by doing multiple degassing compounding or emission regulation of the raw materials (PC and ABS and so on) or PC/ABS recipe optimization or their combinations. However, a big gap is still there between the market demand and industry offers. For instance, typical PC/ABS materials generally shows an odor rank of 3.5-4.0 as evaluated according to PV3900:2000 after being conditioned at 80 °C for 2 hours, while the rank point of 3.0 is desired by the automotive interior market. The cause of bad odor with PC/ABS materials can be traced to the presence of polybutadiene-based rubbers in polymer matrix, which inherently have poor thermal instability and will produce odorous volatile/gas in thermal processing and thus worse odor of the finished materials.

On the other hand, aromatic polyesters (such as PET, PBT, PTT, PETG and PCTG etc.) have been widely considered as potential blending materials with polycarbonate.

US20070129504A1, US20190048185A1, US6673864B2, EP3099743B1, and US20130331492A1 which describe compositions based on PC/aromatic polyester blends either focus on improved flame retardance or on mechanical properties or on chemical resistance or a combination of these features for the finished materials. However, the odor assessment of such PC blends with all kinds of aromatic or aliphatic polyesters had scarcely been mentioned. WO 2017/149457 A1 discloses chemically resistant polycarbonate-polyester compositions used as filler, antioxidant, thermal stabilizer, quencher and colorant, comprises polycarbonate, poly(1 ,4-cyclohexanedimethylene terephthalate) and poly(carbonate-siloxane).

There is a continuous need for new compositions to offer desirable odor performance/rank (e.g. 3.0 according to PV3900:2000 after being conditioned at 80 °C for 2 hours) for automotive interior materials, while properties such as good flowability, high impact strength, and high heat resistance are also present.

### SUMMARY OF THE INVENTION

Thus, one object of the present invention is to provide a thermoplastic polycarbonate composition which has a combination of low odor rank, good impact performance, good flowability, and good heat resistance.

Therefore, an object of the present invention is a thermoplastic polycarbonate composition comprising the following components, relative to the total weight of the composition:
A) 24 - 70 wt.% of an aromatic polycarbonate not being a polysiloxane-polycarbonate copolymer,
B) 15 - 50 wt.% of a polysiloxane-polycarbonate copolymer, and
C) 12 - 37 wt.% of an amorphous copolyester comprising 1,4-cyclohexanedimethylene terephthalate repeating units having the structure 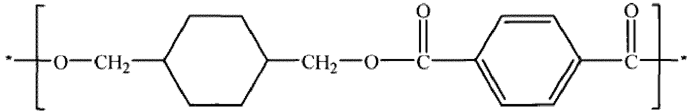 and 2,2,4,4-tetramethyl-1,3-cyclobutylene terephthalate repeating units having the structure 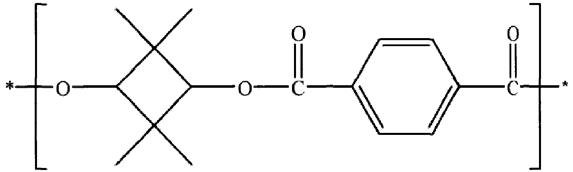 wherein * indicates the position where the unit is connected to the polymer chain and wherein the total content by weight of components A)-C) is not less than 95 wt.%, relative to the total weight of the composition.

Another object of the present invention is a shaped article made from the polycarbonate composition according to the first aspect of the present invention.

Still Another object of the present invention is a process for preparing the shaped article according to the second aspect of the present invention, comprising injection moulding, extrusion moulding, blowing moulding or thermoforming the polycarbonate composition according to the first aspect of the present invention.

Still another object of the present invention is a use of an amorphous copolyester comprising 1,4-cyclohexanedimethylene terephthalate repeating unit having the structure 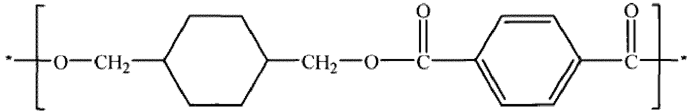 and 2,2,4,4-tetramethyl-1,3-cyclobutylene terephthalate repeating unit having the structure 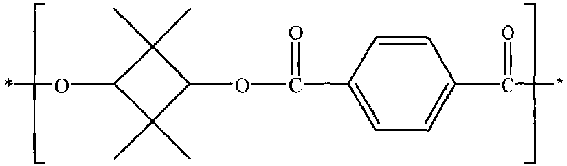
wherein * indicates the position where the unit is connected to the polymer chain,
for improving the odor rank of a composition comprising an aromatic polycarbonate and a polysiloxane-polycarbonate copolymer. The odor rank is preferably measured according to PV3900:2000 after a sample being conditioned at 80 °C for 2 hours

The polycarbonate composition and the shaped article according to the present invention demonstrate an odor rank of 3.0 as measured according to PV3900: 2000 after being conditioned at 80 °C for 2 hours, an impact strength of higher than 20 KJ/m² at -30 °C as measured according to ISO 180/A: 2000 and a Vicat temperature of higher then 125 °C as measured according to ISO 306: 2013. The polycarbonate composition according to the present invention also has good flowability, as demonstrated by the melt volume rate determined according to ISO 1133-1: 2011 at a temperature of 260 °C with a plunger load of 5 kg.

The polycarbonate compositions and the shaped articles according to the present invention are suitable for interior applications which require relatively low odor rank (not more than 3.0, as measured according to PV3900: 2000 after being conditioned at 80 °C for 2 hours), excellent impact strength, and good heat resistance, such as automotive interior applications etc.

Other subjects and characteristics, aspects and advantages of the present invention will emerge even more clearly on reading the description and the examples that follow.

### DETAILED DESCRIPTION OF THE INVENTION

In that which follows and unless otherwise indicated, the limits of a range of values are included within this range, in particular in the expressions "between...and..." and "from ... to ...".

As used herein, the expression "comprising" is to be interpreted as encompassing all specifically mentioned features as well optional, additional, unspecified ones.

Unless defined otherwise, all technical and scientific terms used herein have the same meaning as commonly understood by one of ordinary skill in the art to which the present invention pertains. When the definition of a term in the present description conflicts with the meaning as commonly understood by those skilled in the art the present invention belongs to, the definition described herein shall apply.

Unless otherwise specified, all numerical values expressing amount of ingredients and the like which are used in the description and claims are to be understood as being modified by the term "about".

Technical features described for each element in the present application can combined in any way on the provision that there is no conflict. Preferred, particularly preferred embodiments described for the composition according to the invention apply as well for a shaped articled made from the composition according to the invention or the process or the claimed use.

### Component A

The polycarbonate composition according to the present invention comprises an aromatic polycarbonate as component A.

In the present application, references to "polycarbonate" do not include polysiloxane-polycarbonate copolymers.

According to the invention, "polycarbonate" is to be understood as meaning both homopolycarbonates and copolycarbonates, in particular aromatic ones. These polycarbonates may be linear or branched in known fashion. According to the invention, mixtures of polycarbonates may also be used.

A portion, preferably up to 80 mol%, more preferably of 20 mol% to 50 mol%, of the carbonate groups in the polycarbonates used in accordance with the invention may have been replaced by aromatic dicarboxylic ester groups. Polycarbonates of this type that incorporate not only acid radicals derived from carbonic acid but also acid radicals derived from aromatic dicarboxylic acids in the molecular chain are referred to as aromatic polyester carbonates. For the purposes of the present invention, they are covered by the umbrella term "thermoplastic aromatic polycarbonates".

Replacement of the carbonate groups by the aromatic dicarboxylic ester groups proceeds essentially stoichiometrically and also quantitatively and the molar ratio of the reaction partners is therefore also reflected in the final polyester carbonate. The aromatic dicarboxylic ester groups can be incorporated either randomly or blockwise.

Aromatic polycarbonates selected in accordance with the invention preferably have weight-average molecular weights M_{w} of 15 000 to 40 000 g/mol, more preferably of 16 000 to 34 000 g/mol, even more preferably of 17 000 to 33 000 g/mol, most preferably of 19 000 to 32 000 g/mol. The values for M_{w} here are determined by a gel permeation chromatography, calibrated against bisphenol A polycarbonate standards using dichloromethane as eluent, calibration with linear polycarbonates (made of bisphenol A and phosgene) of known molar mass distribution from PSS Polymer Standards Service GmbH, Germany; calibration according to method 2301-0257502-09D (2009 Edition in German) from Currenta GmbH & Co. OHG, Leverkusen. The eluent is dichloromethane. Column combination of crosslinked styrene-divinylbenzene resins. Diameter of analytical columns: 7.5 mm; length: 300 mm. Particle sizes of column material: 3 µm to 20 µm. Concentration of solutions: 0.2% by weight. Flow rate: 1.0 ml/min, temperature of solutions: 30°C. Detection using a refractive index (RI) detector.

The polycarbonates are preferably produced by the interfacial process or the melt transesterification process, which have been described many times in the literature.

With regard to the interfacial process reference is made for example to H. Schnell, "Chemistry and Physics of Polycarbonates", Polymer Reviews, Vol. 9, Interscience Publishers, New York 1964 p. 33 et seq., to Polymer Reviews, Vol. 10, "Condensation Polymers by Interfacial and Solution Methods", Paul W. Morgan, Interscience Publishers, New York 1965, Chapt. VIII, p. 325, to Dres. U. Grigo, K. Kircher and P. R- Müller "Polycarbonate" in Becker/Braun, Kunststoff-Handbuch, Volume 3/1, Polycarbonate, Polyacetale, Polyester, Celluloseester, Carl Hanser Verlag Munich, Vienna 1992, pp. 118-145 and also to EP 0 517 044 A1.

The melt transesterification process is described, for example, in the "Encyclopedia of Polymer Science", Vol. 10 (1969), Chemistry and Physics of Polycarbonates, Polymer Reviews, H. Schnell, Vol. 9, John Wiley and Sons, Inc. (1964), and in patent specifications DE 10 31 512 A and US 6,228,973 B1.

Particulars pertaining to the production of polycarbonates are disclosed in many patent documents spanning approximately the last 40 years. Reference may be made here by way of example to Schnell, "Chemistry and Physics of Polycarbonates", Polymer Reviews, Volume 9, Interscience Publishers, New York, London, Sydney 1964, to D. Freitag, U. Grigo, P.R. Müller, H. Nouvertné, BAYER AG, "Polycarbonates" in Encyclopedia of Polymer Science and Engineering, Volume 11, Second Edition, 1988, pages 648-718, and finally to U. Grigo, K. Kirchner and P.R. Müller "Polycarbonate" in Becker/Braun, Kunststoff-Handbuch, Volume 3/1, Polycarbonate, Polyacetale, Polyester, Celluloseester, Carl Hanser Verlag Munich, Vienna 1992, pages 117-299.

The production of aromatic polycarbonates is effected for example by reaction of dihydroxyaryl compounds with carbonic halides, preferably phosgene, and/or with aromatic dicarboxyl dihalides, preferably benzenedicarboxyl dihalides, by the interfacial process, optionally using chain terminators and optionally using trifunctional or more than trifunctional branching agents, production of the polyester carbonates being achieved by replacing a portion of the carbonic acid derivatives with aromatic dicarboxylic acids or derivatives of the dicarboxylic acids, specifically with aromatic dicarboxylic ester structural units according to the carbonate structural units to be replaced in the aromatic polycarbonates. Preparation via a melt polymerization process by reaction of dihydroxyaryl compounds with, for example, diphenyl carbonate is likewise possible.

Dihydroxyaryl compounds suitable for the production of polycarbonates are for example hydroquinone, resorcinol, dihydroxydiphenyls, bis(hydroxyphenyl)alkanes, bis(hydroxyphenyl)cycloalkanes, bis(hydroxyphenyl) sulfides, bis(hydroxyphenyl) ethers, bis(hydroxyphenyl) ketones, bis(hydroxyphenyl) sulfones, bis(hydroxyphenyl) sulfoxides, α,α'-bis(hydroxyphenyl)diisopropylbenzenes, phthalimidines derived from derivatives of isatin or phenolphthalein and the ring-alkylated, ring-arylated and ring-halogenated compounds thereof.

Preferred dihydroxyaryl compounds are 4,4'-dihydroxydiphenyl, 2,2-bis(4-hydroxyphenyl)propane (bisphenol A), 2,4-bis(4-hydroxyphenyl)-2-methylbutane, 1,1-bis(4-hydroxyphenyl)-p-diisopropylbenzene, 2,2-bis(3-methyl-4-hydroxyphenyl)propane, dimethylbisphenol A, bis(3,5-dimethyl-4-hydroxyphenyl)methane, 2,2-bis(3,5-dimethyl-4-hydroxyphenyl)propane, bis(3,5-dimethyl-4-hydroxyphenyl)sulfone, 2,4-bis(3,5-dimethyl-4-hydroxyphenyl)-2-methylbutane, 1,1-bis(3,5-dimethyl-4-hydroxyphenyl)-p-diisopropylbenzene and 1,1-bis(4-hydroxyphenyl)-3,3,5-trimethylcyclohexane and also the bisphenols (I) to (III) 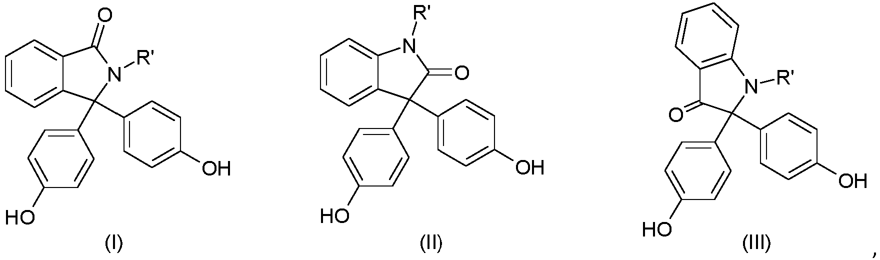 in which R' in each case stands for C₁- to C₄-alkyl, aralkyl or aryl, preferably for methyl or phenyl, very particularly preferably for methyl.

Particularly preferred dihydroxyaryl compounds are 2,2-bis(4-hydroxyphenyl)propane (bisphenol A), 2,2-bis(3,5-dimethyl-4-hydroxyphenyl)propane, 1,1-bis(4-hydroxyphenyl)cyclohexane, 1,1-bis(4-hydroxyphenyl)-3,3,5-trimethylcyclohexane, 4,4'-dihydroxybiphenyl, and dimethylbisphenol A and also the diphenols of formulae (I), (II) and (III).

These and other suitable dihydroxyaryl compounds are described for example in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A and US 2 999 846 A, in DE 1 570 703 A, DE 2063 050 A, DE 2 036 052 A, DE 2 211 956 A and DE 3 832 396 A, in FR 1 561 518, in the monograph "H. Schnell, Chemistry and Physics of Polycarbonates, Interscience Publishers, New York 1964" and also in JP 62039/1986 A, JP 62040/1986 A and JP 105550/1986 A.

In the case of homopolycarbonates only one dihydroxyaryl compound is used; in the case of copolycarbonates two or more dihydroxyaryl compounds are used. The dihydroxyaryl compounds employed, similarly to all other chemicals and assistants added to the synthesis, may be contaminated with the contaminants from their own synthesis, handling and storage. However, it is desirable to use raw materials of the highest possible purity.

Suitable carbonic acid derivatives are for example phosgene and diphenyl carbonate.

Suitable chain terminators that may be used in the production of polycarbonates are monophenols. Suitable monophenols are for example phenol itself, alkylphenols such as cresols, p-tert-butylphenol, cumylphenol and mixtures thereof.

Preferred chain terminators are the phenols mono- or polysubstituted by linear or branched C₁- to C₃₀-alkyl radicals, preferably unsubstituted or substituted by tert-butyl. Particularly preferred chain terminators are phenol, cumylphenol and/or p-tert-butylphenol.

The amount of chain terminator to be employed is preferably 0.1 to 5 mol% based on the moles of diphenols employed in each case. The addition of the chain terminators may be effected before, during or after the reaction with a carbonic acid derivative.

Suitable branching agents are the trifunctional or more than trifunctional compounds familiar in polycarbonate chemistry, in particular those having three or more than three phenolic OH groups. Suitable branching agents are for example 1,3,5-tri(4-hydroxyphenyl)benzene, 1,1,1-tri(4-hydroxyphenyl)ethane, tri(4-hydroxyphenyl)phenylmethane, 2,4-bis(4-hydroxyphenylisopropyl)phenol, 2,6-bis(2-hydroxy-5'-methylbenzyl)-4-methylphenol, 2-(4-hydroxyphenyl)-2-(2,4-dihydroxyphenyl)propane, tetra(4-hydroxyphenyl)methane, tetra(4-(4-hydroxyphenylisopropyl)phenoxy)methane and 1,4-bis((4',4"-dihydroxytriphenyl)methyl)benzene and 3,3-bis(3-methyl-4-hydroxyphenyl)-2-oxo-2,3-dihydroindole.The amount of the branching agents for optional employment is preferably 0.05 mol% to 2.00 mol%, based on moles of dihydroxyaryl compounds used in each case. The branching agents may be either initially charged together with the dihydroxyaryl compounds and the chain terminators in the aqueous alkaline phase or added dissolved in an organic solvent before the phosgenation. In the case of the transesterification process the branching agents are employed together with the dihydroxyaryl compounds.

Particularly preferred polycarbonates are the homopolycarbonate based on bisphenol A, the homopolycarbonate based on 1,1-bis(4-hydroxyphenyl)-3,3,5-trimethylcyclohexane, 4,4'-dihydroxybiphenyl, and the copolycarbonates based on the two monomers bisphenol A and 1,1-bis(4-hydroxyphenyl)-3,3,5-trimethylcyclohexane and also homo- or copolycarbonates derived from the diphenols of formulae (I), (II) and (III) 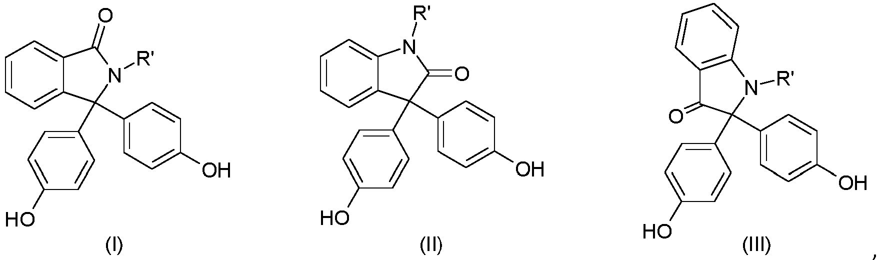 in which R' in each case stands for C₁- to C₄-alkyl, aralkyl or aryl, preferably for methyl or phenyl, very particularly preferably for methyl.

As examples of aromatic polycarbonate suitable for the present invention, mention can be made of those produced from bisphenol A and phosgene, and sold under the trade name Makrolon^{®} 2400, Makrolon^{®} 2600, Makrolon^{®} 2800, Makrolon^{®} 3100 by Covestro Co., Ltd.

The aromatic polycarbonate is present in the polycarbonate composition in an amount ranging from 24 wt.% to 70 wt.%, relative to the total weight of the polycarbonate composition.

### Component B

The polycarbonate composition according to the present invention comprises a polysiloxane-polycarbonate block copolymer (also named as "SicoPC" in the context of the present application) as component B.

The polysiloxane-polycarbonate copolymer comprises polydiorganosiloxane (also named as "siloxane" in the context of the present application) blocks and polycarbonate blocks.

The polysiloxane-polycarbonate copolymer can be obtained by using a (poly)siloxane of the following formula (1a) as a dihydroxyaryl compound in the process for preparation an aromatic polycarbonate as mentioned previously with respect to component A: 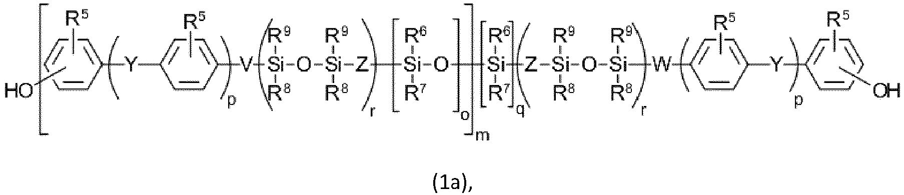 wherein
R⁵ stands for hydrogen or C₁- to C₄-alkyl, C₁- to C₄- alkoxy, preferably for hydrogen or methyl or methoxy particularly preferably for hydrogen,
R⁶, R⁷, R⁸ and R⁹ mutually independently stand for C₆- to C₁₂-aryl or C₁- to C₄-alkyl, preferably phenyl or methyl, in particular for methyl,
Y stands for a single bond, SO₂-, -S-, -CO-, -O-, C₁- to C₆-alkylene, C₂- to C₅-alkylidene, C₆- to C₁₂-arylene, which can optionally be condensed with further aromatic rings containing hetero atoms, or for a C₅- to C₆-cycloalkylidene residue, which can be singly or multiply substituted with C₁- to C₄-alkyl, preferably for a single bond, -O-, isopropylidene or for a C₅-to C₆-cycloalkylidene residue, which can be singly or multiply substituted with C₁- to C₄-alkyl,
V stands for oxygen, C₂- to C₆-alkylene or C₃- to C₆-alkylidene, preferably for oxygen or C₃-alkylene,
p, q and r mutually independently each stand 0 or 1,
if q = 0, W is a single bond, if q = 1 and r = 0 is, W stands for -O-, C₂- to C₆-alkylene or C₃- to C₆-alkylidene, preferably for -O- or C₃-alkylene,
if q = 1 and r = 1, W and V mutually independently stand for C₂- to C₆-alkylene or C₃- to C₆-alkylidene, preferably for C₃ alkylene,
Z stands for C₁- to C₆-alkylene, preferably C₂-alkylene,
o stands for an average number of repeating units from 10 to 500, preferably 10 to 100 and
m stands for an average number of repeating units from 1 to 10, preferably 1 to 6, particularly preferably 1.5 to 5.

It is also possible to use dihydroxyaryl compounds, in which two or more siloxane blocks of general formula (1a) are linked via terephthalic acid and/or isophthalic acid under formation of ester groups.

Especially preferable are (poly)siloxanes of the formulae (2) and (3) 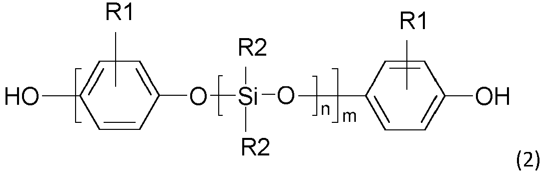 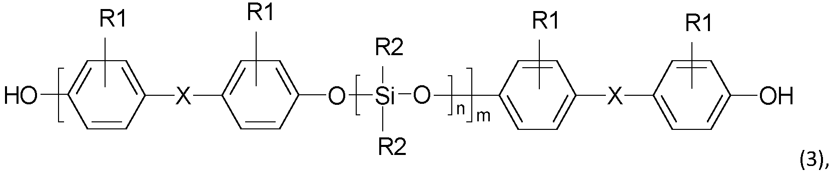
wherein R¹ stands for hydrogen, C₁- to C₄-alkyl, preferably for hydrogen or methyl and especially preferably for hydrogen,
R² mutually independently stand for aryl or C₁- to C₄-alkyl, preferably for methyl,
X stands for a single bond, -SO₂-, -CO-, -O-, -S-, C₁- to C₆-alkylene, C₂- to C₅-alkylidene or for C₆-to C₁₂-arylene, which can optionally be condensed with further aromatic rings containing hetero atoms,
X stands for a single bond, -SO₂-, -CO-, -O-, -S-, C₁- to C₆-alkylene, C₂- to C₅-alkylidene, C₅- to C₁₂-cycloalkylidene or for C₆- to C₁₂-arylene, which can optionally be condensed with further aromatic rings containing hetero atoms,
X preferably stands for a single bond, isopropylidene, C₅- to C₁₂-cycloalkylidene or oxygen, and especially preferably stands for isopropylidene,
n means an average number from 10 to 400, preferably 10 and 100, especially preferably 15 to 50 and
m stands for an average number from 1 to 10, preferably 1 to 6 and especially preferably from 1.5 to 5.

Also preferably the siloxane block can be derived from one of the following structures: 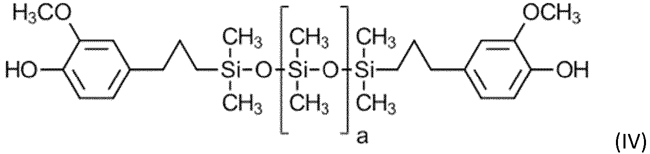 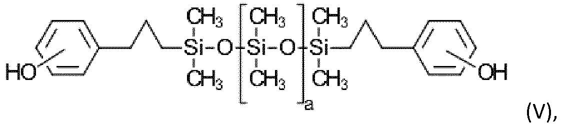 preferably (Va) 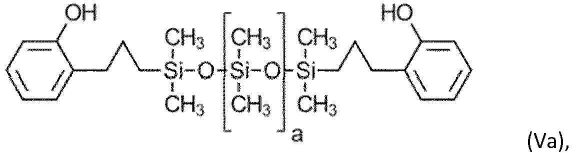 or 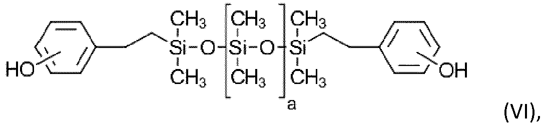 wherein a in formulae (IV), (V) und (VI) means an average number from 10 to 400, preferably from 10 to 100 and especially preferably from 15 to 50.

It is equally preferable, that at least two of the same or different siloxane blocks of the general formulae (IV), (V) or (VI) are linked via terephthalic acid and/isophthalic acid under formation of ester groups.

It is also preferable, if p = 0 in formula (1a), V stands for C₃-alkylene,
if r = 1, Z stands for C₂-alkylene, R⁸ and R⁹ stand for methyl,
if q = 1, W stands for C₃-alkylene,
if m = 1, R⁵ stands for hydrogen or C₁- to C₄-alkyl, preferably for hydrogen or methyl, R⁶ and R⁷ mutually independently stand for C₁- to C₄-alkyl, preferably methyl, and o stands for 10 to 500.

The weight-average molecular weight Mw of the siloxane block, is preferably 3000 to 20 000 g/mol, and more preferably 3500 to 15000 g/mol, determined by gel permeation chromatography using a BPA (bisphenol A) polycarbonate as standard and dichloromethane as eluent. It should be understand that SiCoPC may comprise more than one siloxane block in one polymer chain.

The polysiloxane-polycarbonate block copolymer and the production thereof are described in WO 2015/052106 A2.

Advantageously, the polysiloxane-polycarbonate copolymer is present in the polycarbonate composition according to the present invention in an amount ranging from 15 wt.% to 50 wt.%, preferably from 17.5 wt.% to 45 wt.%, relative to the total weight of the polycarbonate composition.

### Component C

The polycarbonate composition according to the present invention comprises an amorphous copolyester as component C.

The amorphous copolyester comprises 1,4-cyclohexanedimethylene terephthalate repeating units having the structure 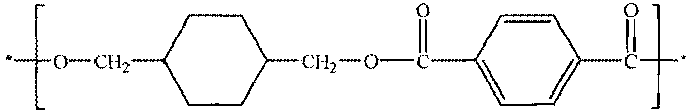 and 2,2,4,4-tetramethyl-1,3-cyclobutylene terephthalate repeating units having the structure 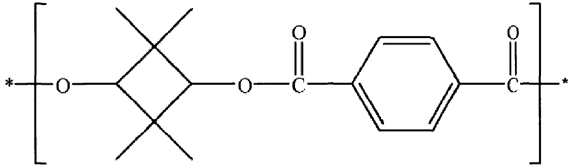 wherein * indicates the position where the unit is connected to the polymer chain.

The amorphous copolyester can be obtained by polymerization of 2,2,4,4-tetramethyl-1,3-cyclobutanediol (TMCBD), terephthalic acid (or dimethyl terephthalate) and 1,4-cyclohexanediol.

According to the different positions of hydroxyl groups, the monomer TMCBD has *cis* and *trans* isomers. The C4 ring of the cis-TMCBD is non-planar and the crystals have a dihedral angle of 17.5°, while the trans-TMCBD has a dihedral angle of 0° and has a symmetrical structure; the C4 ring is very stable.

Preferably, the copolyester comprises 10 wt.% to 90 wt.% of the cyclohexanedimethylene terephthalate repeating units and 10 wt.% to 90 wt.% of the 2,2,4,4-tetramethylcyclobutylene terephthalate repeating units, based on the weight of the copolyester.

Advantageously, the copolyester has a melt volume rate (MVR) of 5 to 30 g/mol, preferably of 8 to 25 g/mol, and more preferably of 10 to 20 g/mol, as measured in accordance with ISO 1133-1: 2011 at 260°C under a loading of 5kg.

Advantageously, the copolyester is present in the polycarbonate composition according to the present invention in an amount ranging from 12 wt.% to 37 wt.%, preferably from 15 wt.% to 35 wt.%, relative to the total weight of the polycarbonate composition.

### Additional additives

In addition to components A-C mentioned above, the polycarbonate composition according to the present invention can optionally comprise of one or more additional additives conventionally used in polymer compositions, such as lubricants and demoulding agents (e.g. pentaerythritol tetrastearate), antioxidants, stabilizers (such as thermal stabilizers, UV absorbers, IR absorbers), antistatic agents (including inorganic antistatic agents, such as, conductive carbon blacks, carbon fibres, carbon nanotubes and organic antistatic agents), colorants, etc.

The person skilled in the art can select the type and the amount of the additional additives so as to not significantly adversely affect the desired properties of the polycarbonate composition according to the present invention.

Preferably, the composition according to the present invention does not comprise butadiene-based rubber.

Advantageously, the total content by weight of components A)-C) is no less than 90 wt.%, preferably no less than 95 wt.%, more preferably no less than 98 wt.%, relative to the total weight of the polycarbonate composition according to the present invention.

In some preferred embodiments, the thermoplastic polycarbonate composition according to the present invention comprises the following components, relative to the total weight of the composition:
A) 24 - 70 wt.% of an aromatic polycarbonate not being a polysiloxane-polycarbonate copolymer,
B) 15 - 45 wt.% of a polysiloxane-polycarbonate copolymer, and
C) 15 - 35 wt.% of an amorphous copolyester comprising, based on the weight of the copolyester, 10 wt.% to 90 wt.% of 1,4-cyclohexanedimethylene terephthalate repeating units having the structure 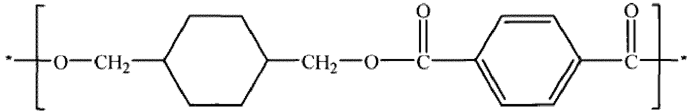 and 2,2,4,4-tetrmethyl-1,3-cyclobutylene terephthalate repeating units having the structure 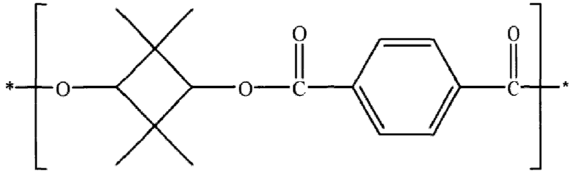 wherein
   * indicates the position where the unit is connected to the polymer chain,
   the total content by weight of components A)-C) is not less than 95 wt.%, preferably not less than 98 wt.%, relative to the total weight of the composition.

In some preferred embodiments, the thermoplastic polycarbonate composition according to the present invention consists of the following components, relative to the total weight of the composition:
A) 24 - 70 wt.% of an aromatic polycarbonate not being a polysiloxane-polycarbonate copolymer,
B) 15 - 45 wt.% of a polysiloxane-polycarbonate copolymer, and
C) 15 - 35 wt.% of an amorphous copolyester comprising, based on the weight of the copolyester, 10 wt.% to 90 wt.% of 1,4-cyclohexanedimethylene terephthalate repeating units having the structure 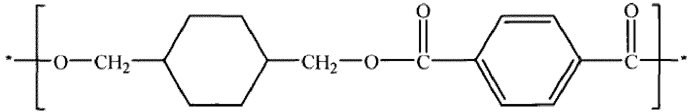 and 2,2,4,4-tetrmethyl-1,3-cyclobutylene terephthalate repeating units having the structure 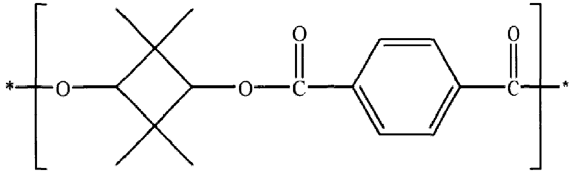 wherein * indicates the position where the unit is connected to the polymer chain, and
D) one or more additive selected from lubricants, demoulding, antioxidants, stabilizers, antistatic agents, colorants, and a mixture thereof
   and wherein the total content by weight of components A)-C) is not less than 95 wt.%, relative to the total weight of the composition.

### Preparation of the polycarbonate composition

The polycarbonate composition according to the present invention can be in the form of, for example, pellets, and can be prepared by a variety of methods involving intimate admixing of the materials desired in the composition.

For example, the materials desired in the composition are first blended in a high speed mixer. Other low shear processes, including but not limited to hand mixing, can also accomplish this blending. The blend is then fed into the throat of a twin-screw extruder via a hopper. Alternatively, at least one of the components can be incorporated into the composition by feeding directly into the extruder at the throat and/or downstream through a side stuffer. Additives can also be compounded into a masterbatch with a desired polymeric resin and fed into the extruder. The extruder is generally operated at a temperature higher than that necessary to cause the composition to flow. The extrudate is immediately quenched in a water bath and pelletized. The pellets can be one-fourth inch long or less as described. Such pellets can be used for subsequent molding, shaping or forming.

Melt blending methods are preferred due to the availability of melt blending equipment in commercial polymer processing facilities.

Illustrative examples of equipment used in such melt processing methods include: corotating and counter-rotating extruders, single screw extruders, co-kneaders, and various other types of extrusion equipment.

The temperature of the melt in the processing is preferably minimized in order to avoid excessive degradation of the polymers. It is often desirable to maintain the melt temperature between 230°C and 350°C in the molten resin composition, although higher temperatures can be used provided that the residence time of the resin in the processing equipment is kept short.

In some cases, the molten composition exits from a processing equipment such as an extruder through small exit holes in a die. The resulting strands of the molten resin are cooled by passing the strands through a water bath. The cooled strands can be chopped into small pellets for packaging and further handling.

### Shaped articles

The polycarbonate composition according to the present invention can be used, for example, for the production of various types of shaped articles.

Another object of the present invention is a shaped article made from the polycarbonate composition according to the first aspect of the present invention.

As used herein, "made from" means that the shaped article comprises the polycarbonate composition according to the first aspect of the present invention, preferably the shaped article consists of the polycarbonate composition according to the first aspect of the present invention.

As examples of shaped articles, mention can be made of, for example, door handle, instrument panel, and body parts or interior trim for commercial vehicles, especially for the motor vehicle sector.

### Preparation of shaped articles

The polycarbonate composition according to the present invention can be processed into shaped articles by a variety of means such as injection moulding, extrusion moulding, blowing moulding or thermoforming to form shaped articles.

Thus, according to the third aspect, the present invention provides a process for preparing the shaped article according to the second aspect of the present invention, comprising injection moulding, extrusion moulding, blowing moulding or thermoforming the polycarbonate composition according to the first aspect of the present invention.

### Use of an amorphous copolyester

According to the fourth aspect, the present invention provides a use of an amorphous copolyester comprising 1,4-cyclohexanedimethylene terephthalate repeating unit having the structure 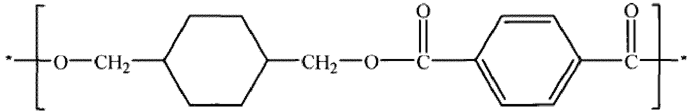 and 2,2,4,4-tetramethyl-1,3-cyclobutylene terephthalate repeating unit having the structure 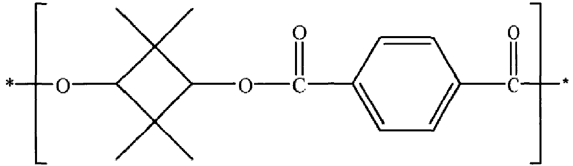
wherein * indicates the position where the unit is connected to the polymer chain,
for improving the odor rank of a composition comprising an aromatic polycarbonate and a polysiloxane-polycarbonate copolymer. The odor rank is preferably determined according to PV3900:2000.

The amorphous copolyester, the aromatic polycarbonate and the polysiloxane-polycarbonate copolymer are the same as defined previously.

Preferably, the amorphous copolyester is present in amount ranging from 15 wt.% to 35 wt.% in the composition, relative to the total weight of the composition.

Preferably, the polysiloxane-polycarbonate copolymer is present in an amount ranging from 15 wt.% to 50 wt.%, preferably from 17.5 wt.% to 45 wt.%, relative to the total weight of the polycarbonate composition.

Preferably, the copolyester is present in an amount ranging from 12 wt.% to 37 wt.%, from 15 wt.% to 35 wt.%, relative to the total weight of the polycarbonate composition.

The Examples which follow serve to illustrate the invention in greater detail.

### Examples

### Materials used

### Component A

PC: an aromatic polycarbonate resin having a weight average molecular weight of about 28,000 g/mol produced from bisphenol A and phosgene, available from Covestro, Co., Ltd.

### Component B

SicoPC: Copolycarbonate based on bisphenol A, siloxane monomer and carbonyl chloride, available as D0013 from the company Unicolour material.

### Component C

Tritan(C1): a copolymer of dimethyl terephthalate (DMT), 1,4-cyclohexanedimethanol (CHDM), and 2,2,4,4-tetramethyl-1,3-cyclobutanediol (TMCBD), with a heat deflection temperature of 85 °C at a thickness of 3.2 mm and 1.82 megapascals, available as TRITAN^{™} CopolyesterTX1001 from Eastman Chemical Company.

PCCD(C2): a copolymer of 1,4-cyclohexanedimethanol (CHDM) and 1,4-dimethylcyclohexane dicarboxylate (DMCD), available as NEOSTAR COPOLYESTER 24303 from Eastman Chemical Company_{∘}

PETG(C3): a copolymer of terephthalic acid (PTA), cylclohexylenedimethylene (CHDM), ethylene glycol (EG), available as GN071 from Eastman Chemical Company, with a heat deflection temperature of 62 °C at 3.2 millimeter thickness and 1.82 megapascals.

PBT(C4): polybutylene terephthalate, having an intrinsic viscosity of 1.2 dl/g, available as 1100-211 S from ChangChun Plastic.

### Additives

ABS-1: a core-shell impact modifier prepared by emulsion polymerization of 58 wt. %, based on the ABS polymer, of a mixture of 24 wt. % of acrylonitrile and 76 wt. % of styrene in the presence of 42 wt. %, based on the ABS polymer, of a linear polybutadiene rubber, available as P60 from the company Ineos ABS (Deutschland) GmbH.

ABS-2: a core-shell impact modifier prepared by emulsion polymerization, available as TERLURAN HI 10 Q520 from Ineos ABS (Deutschland) GmbH.

MBS: Methyl methacrylate-butadiene-styrene (MBS) with a core/shell structure, available as Kane Ace M732 from Japan Kaneka Chemical Co. Ltd.

SAN: styrene-acrylonitrile copolymer, available as LUSTRAN^{®} SAN DN50 from INEOS Styrolution GmbH.

Antioxidant: a mixture of 80 wt.% of Irgafos^{®} 168 (tris(2,4-ditert-butylphenyl)phosphite) and 20 wt.% of Irganox^{®} 1076 (2,6-ditert-butyl-4-(octa-decanoxycarbonylethyl)phenol, available as Irganox^{®} B900 from BASF (China) Company Limited.

Phosphorous acid: from the company Sigma-Aldrich Trade Company.

Carbon Black: available as HIBLACK 600 LB from Evonik Oxeno GmbH.

### Test methods

The physical properties of compositions obtained in the examples were tested as follows:
The melt flowability was evaluated by means of the melt volume flow rate (MVR) measured in accordance with ISO 1133-1: 2011 at a temperature of 260 °C with a plunger load of 5 kg or at a temperature of 300 °C with a plunger load of 1.2 kg.

The IZOD notched impact strength was measured in accordance with ISO 180/1A:2000 under the energy of 5.5J on a notched single gated specimen with dimensions of 80 mm × 10 mm × 4 mm conditioned under testing temperature for 2 hours.

The Vicat softening temperature was determined in accordance with ISO 306: 2013 on bars of dimensions 80 mm × 10 mm × 4 mm at a heating rate of 120°C/h.

The tensile stress, the tensile strain at break and tensile modulus were determined at room temperature (23 °C) in accordance with ISO 527-2: 2012 on shoulder bars of dimensions 170 mm × 10 mm × 4 mm.

The odor rank was evaluated in accordance with PV3900-2000 as follows:
A 20 g sample was placed in a 1L bowl. A test container was closed tightly and aged at a temperature of 80 °C for 2 hours in a preheated desiccator. The evaluation was performed by a minimum of five examiners. The odor was evaluated using the evaluation scale (see Table 1) with grades 1 to 6, with half-steps allowed, for all possible variants.

**Table 1**

| Grade | Evaluation |
|---|---|
| 1 | not perceptible |
| 2 | perceptible, not offensive |
| 3 | clearly perceptible, but not yet offensive |
| 4 | offensive |
| 5 | strongly offensive |
| 6 | unbearable |

### Invention Examples 1-4 (IE1-IE4) and Comparative Examples 1-15 (CE1-CE15)

The materials listed in Table 2 were compounded in a twin-screw extruder (ZSK-25) (from Werner and Pfleiderer) at a speed of rotation of 225 rpm, a throughput of 20 kg/h, and a machine temperature of 260°C, and granulated.

The granules obtained were processed on an injection moulding machine (from Arburg) at a melt temperature of 260° C and a mold temperature of 80° C to produce test specimens.

The physical properties of compositions obtained were tested and the results were summarized in Table 2.

**Table 2**

| | | | CE1 | CE2 | CE3 | CE4 | CE5 | CE6 | IE1 | IE2 | IE3 | IE4 | CE7 | CE8 | CE9 | CE10 | CE11 | CE12 | CE13 | CE14 | CE15 |
|---|---|---|---|---|---|---|---|---|---|---|---|---|---|---|---|---|---|---|---|---|---|
| PC (A) | | | 60.30 | 68.48 | 66.48 | 64.48 | 61.48 | 61.48 | 66.98 | 56.48 | 51.98 | 41.48 | 31.48 1 | 21.48 | 100 | - | - | 69.48 | 69.48 | 69.48 | 61.98 |
| Tritan(C1) | | | - | 30.00 | 30.00 | 30.00 | 30.00 | 10.00 | 15.00 | 15.00 | 30.00 | 30.00 | 40.00 | 50.00 | - | 100 | - | - | - | - | 30.00 |
| SicoPC(B) | | | - | - | - | - | - | 28 | 17.50 | 28.00 | 17.50 | 28.00 | 28.00 | 28.00 | - | - | 100 | - | - | - | |
| PCCD(C2) | | | - | - | - | - | - | - | - | - | - | - | - | - | - | - | - | 30.00 | - | - | |
| PETG(C3) | | | - | - | - | - | - | - | - | - | - | - | - | - | - | - | - | - | 30.00 | - | |
| PBT(C4) | | | - | - | - | - | - | - | - | - | - | - | - | - | - | - | - | - | - | 30.00 | |
| ABS-2 | | | 17.5 | | | | | | | | | | | | | | | | | | |
| ABS-1 | | | 12 | - | - | - | - | - | - | - | - | - | - | - | - | - | - | - | - | - | 8 |
| SAN | | | 9.5 | - | - | - | - | - | - | - | - | - | - | - | - | - | - | - | - | - | |
| MBS | | | - | 1 | 3 | 5 | 8 | - | - | - | - | - | - | - | - | - | - | - | - | - | |
| Phosphorous acid | | | - | 0.02 | 0.02 | 0.02 | 0.02 | 0.02 | 0.02 | 0.02 | 0.02 | 0.02 | 0.02 | 0.02 | - | - | - | 0.02 | 0.02 | 0.02 | 0.02 |
| Carbon Black | | | 0.4 | 0.4 | 0.4 | 0.4 | 0.4 | 0.4 | 0.4 | 0.4 | 0.4 | 0.4 | 0.4 | 0.4 | - | - | - | 0.4 | 0.4 | 0.4 | |
| Antioxidant | | | 0.2 | 0.1 | 0.1 | 0.1 | 0.1 | 0.1 | 0.1 | 0.1 | 0.1 | 0.1 | 0.1 | 0.1 | - | - | - | 0.1 | 0.1 | 0.1 | |

| Properties | Test conditions | Units | | | | | | | | | | | | | | | | | | | |
|---|---|---|---|---|---|---|---|---|---|---|---|---|---|---|---|---|---|---|---|---|---|
| MVR | 300°C, 1.2kg | cm³/10min | - | - | - | - | - | - | - | - | - | - | - | - | - | - | 3.57 | - | - | - | - |
| MVR | 260°C, 5kg | cm³/10min | 15.1 | 13.5 | 12.6 | 12.5 | 10.7 | 10.3 | 11.9 | 11.9 | 12.4 | 12.6 | 13.0 | 13.6 | 10.2 | 13.1 | - | 23.8 | 36.2 | 32.1 | 10.7 |
| Tensile modulus | 1mm/min | MPa | 2200 | 2070 | 1990 | 1920 | 1810 | 2050 | 2070 | 2000 | 1900 | 1840 | 1820 | 1760 | 2400 | 1460 | 2080 | 1900 | 2300 | 2650 | 1810 |
| Tensile stress at yield | 50mm/min | MPa | 51.5 | 58.3 | 56.3 | 54.2 | 51.8 | 56.1 | 55.3 | 53.4 | 54.1 | 52.2 | 52.2 | 50.0 | 66 | 44.9 | 57.6 | 56.3 | 65.5 | 69.0 | 51.8 |
| Tensile strain at break | 50mm/min | % | 110 | 97 | 98 | 70 | 97 | 98 | 98 | 100 | 100 | 100 | 110 | 110 | 130 | 120 | 120 | 100 | 120 | 120 | 97 |
| Notched Izod impact strength | 23°C | KJ/m² | 48P | 64P | 59P | 57P | 52P | 62P | 68P | 63P | 70P | 64P | 63P | 63P | 70P | 80P | 61P | 10C | 7.2C | 7.0C | 52P |
| | -30°C | KJ/m² | 40C | 11C | 16C | 23C | 23C | 31C | 24C | 49P | 27C | 48P | 20C | 20C | 15C | 8.8C | 57P | 7.4C | 5.7C | 6.3C | 23C |
| Vicat softening temperature | 50N | °C | 121 | 134 | 133 | 134 | 132 | 140 | 139 | 138 | 133 | 132 | 125 | 120 | 145 | 109 | 143 | 122 | 125 | 123 | 132 |
| Odor Rank | - | - | 3.5 | 3.5 | 3.5 | 3.5 | 3.5 | 3.5 | 3.0 | 3.0 | 3.0 | 3.0 | 3.5 | 3.5 | 3.5 | 3.5 | 3.5 | 3.5 | 3.5 | 3.5 | 3.5 |

| | | | | | | | | | | | | | | | | | | | | | |
|---|---|---|---|---|---|---|---|---|---|---|---|---|---|---|---|---|---|---|---|---|---|
| *: P means partial break and C means complete break. | | | | | | | | | | | | | | | | | | | | | |

As shown in Table 2, the composition of comparative example 1 (CE1) not comprising Tritan demonstrates an odor rank of 3.5.

As demonstrated by compositions of comparative examples 2-5 (CE2-CE5) comprising a common impact modifier such as MBS and not comprising SicoPC have the odor rank of 3.5.

It can be seen from Table 2, polycarbonate compositions of invention examples 1-4 (IE1-IE4) demonstrates a combination of good odor rank, good impact strength, good flowability, and good heat resistance. However, such a combination of low odor rank, excellent impact strength, good flowability, and good heat resistance can be achieved only when the Tritan content is in a suitable range (i.e. 15-35 wt.%). When the Tritan content is ≤ 10 wt. % (CE6) or > 40 wt.% (CE7 and CE8), the odor rank is not acceptable.

As demonstrated by compositions of comparative examples 9-11 (CE 9-11), pure resins of polycarbonate resin, Tritan, and polysiloxane-polycarbonate copolymer alone all exhibit an odor rank of 3.5, which is above the desired odor rank of 3.0, for auto interior applications.

As demonstrated by comparative examples 12-14 (CE 12-14), other types of amorphous copolyesters (such as PCCD) or semi-crystalline copolyesters (such as PETG and PBT), when blended with polycarbonate, cannot result in the desirable odor rank of 3.0.

The odor performance is bad, if ABS is included in the composition (CE 15).

### Invention Examples 5-9 (IE5-9) and Comparative Examples 16-19 (CE16-19)

Similarly, the materials listed in Table 3 were compounded, the physical properties of compositions obtained were tested and the results were summarized in Table 3.

**Table 3**

| | | | CE16 | IE5 | IE6 | IE7 | IE8 | IE9 | CE17 | CE18 | CE19 |
|---|---|---|---|---|---|---|---|---|---|---|---|
| PC | | | 74.98 | 49.98 | 39.98 | 34.98 | 24.98 | 36.98 | 29.98 | 14.98 | 14.98 |
| Tritan | | | 15.00 | 15.00 | 15.00 | 30.00 | 30.00 | 35.00 | 15.00 | 15.00 | 30.00 |
| SicoPC | | | 10.00 | 35.00 | 45.00 | 35.00 | 45.00 | 28.00 | 55.00 | 70.00 | 55.00 |
| Phosphorous acid | | | 0.02 | 0.02 | 0.02 | 0.02 | 0.02 | 0.02 | 0.02 | 0.02 | 0.02 |

| Properties | Test conditions | Units | | | | | | | | | |
|---|---|---|---|---|---|---|---|---|---|---|---|
| MVR | 260°C, 5kg | cm³/10min | 12.7 | 11.5 | 11.0 | 12.6 | 11.5 | 11.9 | 10.2 | 9.09 | 10.8 |
| Tensile modulus | 1mm/min | Mpa | 2200 | 2050 | 1980 | 1920 | 1850 | 1910 | 1890 | 1810 | 1770 |
| Tensile stress at yield | 50mm/min | Mpa | 55.9 | 52 | 48.7 | 50.3 | 47.7 | 50.4 | 51.7 | 49.6 | 49.2 |
| Tensile strain at break | 50mm/min | % | 96 | 101 | 99 | 105 | 103 | 104 | 98 | 78 | 100 |
| Notched Izod impact strength | 23°C | KJ/m² | 68P* | 61P | 56P | 62P | 57P | 65P | 51P | 46P | 53P |
| | -30°C | KJ/m² | 16C* | 41P | 41P | 36C | 39P | 24C | 41P | 39P | 40P |
| Vicat softening temperature | 50N | °C | 140 | 136 | 134 | 129 | 127 | 128 | 133 | 128 | 125 |
| Odor Rank | - | - | 3.0 | 3.0 | 3.0 | 3.0 | 3.0 | 3.0 | 3.5 | 3.5 | 3.5 |

| | | | | | | | | | | | |
|---|---|---|---|---|---|---|---|---|---|---|---|
| *: P means partial break and C means complete break. | | | | | | | | | | | |

It can be seen from Table 3 that when the content of polysiloxane-polycarbonate copolymer is too low (10 wt.% in CE16) or too high (55 wt.% in CE17-CE19), compositions with good odor rank and excellent impact strength at -30 °C cannot be obtained.

It also can be seen from Table 3 that when the contents of the amorphous copolyester and the polysiloxane-polycarbonate copolymer are in a suitable range (i.e. 15-35 wt.%), the polycarbonate compositions obtained (IE5-IE8) can have a desirable combination of odor rank of 3.0, excellent impact strength at -30 °C, good flowability and good heat resistance.

## Claims

1. A thermoplastic polycarbonate composition comprising the following components, relative to the total weight of the composition:
A) 24 - 70 wt.% of an aromatic polycarbonate not being a polysiloxane-polycarbonate copolymer,
B) 15 - 50 wt.% of a polysiloxane-polycarbonate copolymer, and
C) 12 - 37 wt.% of an amorphous copolyester comprising 1,4-cyclohexanedimethylene terephthalate repeating units having the structure 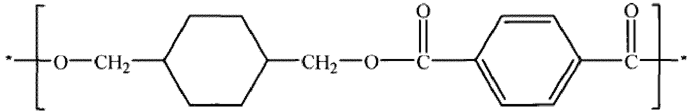 and 2,2,4,4-tetramethyl-1,3-cyclobutylene terephthalate repeating units having the structure 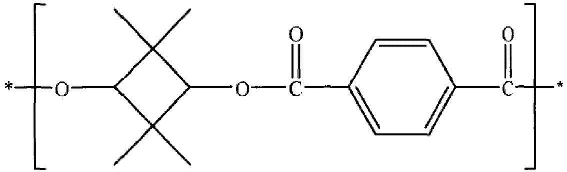 wherein * indicates the position where the unit is connected to the polymer chain and wherein the total content by weight of components A)-C) is not less than 95 wt.%, relative to the total weight of the composition.

2. The composition according to claim 1, wherein the polysiloxane-polycarbonate copolymer comprises siloxane blocks derived from a (poly)siloxanes selected from those of formulae (2) and (3) 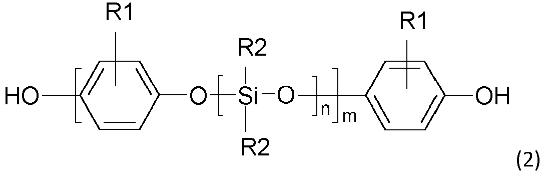 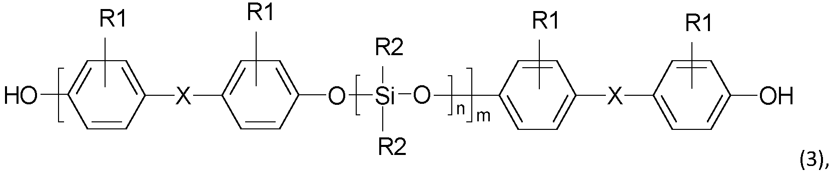
wherein R¹ stands for hydrogen, C₁- to C₄-alkyl, preferably for hydrogen or methyl and especially preferably for hydrogen,
R² mutually independently stand for aryl or C₁-to C₄-alkyl, preferably for methyl,
X stands for a single bond, -SO₂-, -CO-, -O-, -S-, C₁- to C₆-alkylene, C₂- to Cs-alkylidene or for C₆- to C₁₂-arylene, which can optionally be condensed with further aromatic rings containing hetero atoms, preferably, X stands for a single bond, isopropylidene, C₅- to C₁₂-cycloalkylidene or oxygen,
n means an average number from 10 to 400, preferably 10 and 100, especially preferably 15 to 50 and
m stands for an average number from 1 to 10, preferably 1 to 6 and especially preferably from 1.5 to 5.

3. The composition according to claim 1 or 2, wherein the polysiloxane-polycarbonate copolymer comprises 2 wt.% to 20 wt.% of siloxane blocks, relative to the weight of the polysiloxane-polycarbonate copolymer.

4. The composition according to claim 3, wherein the weight-average molecular weight of the siloxane block, is 3000 to 20 000 g/mol, and preferably 3500 to 15000 g/mol, determined by gel permeation chromatography and using a BPA (bisphenol A) polycarbonate standard.

5. The composition according to any of claims 1 to 4, wherein the polysiloxane-polycarbonate copolymer is present in an amount ranging from 17.5 wt.% to 45 wt.%, relative to the total weight of the composition.

6. The composition according to any of claims 1 to 5, wherein the amorphous copolyester comprises 10 wt.% to 90 wt.% of the cyclohexanedimethylene terephthalate repeating units and 10 wt.-% to 90wt.-% of the 2,2,4,4-tetramethylcyclobutylene terephthalate repeating units, based on the weight of the copolyester.

7. The composition according to any of claims 1 to 6, wherein the amorphous copolyester has a melt volume rate (MVR) of 5 to 30 g/mol, preferably of 8 to 25 g/mol, and more preferably of 10 to 20 g/mol, as measured in accordance with ISO 1133-1: 2011 at 260°C under a loading of 5 kg.

8. The composition according to any of claims 1 to 7, wherein the total content by weight of components A)-C) is not less than 98 wt.%, relative to the total weight of the composition.

9. A shaped article produced from the composition according to any of claims 1 to 8.

10. A process for preparing the shaped article according to claim 9, comprising injection moulding, extrusion moulding, blowing moulding or thermoforming the polycarbonate composition according to any of claims 1 to 8.

11. Use of an amorphous copolyester comprising 1,4-cyclohexanedimethylene terephthalate repeating units having the structure 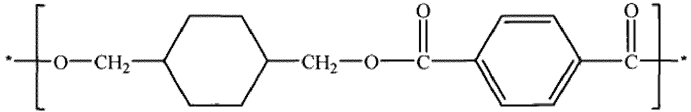 and 2,2,4,4-tetrmethyl-1,3-cyclobutylene terephthalate repeating units having the structure 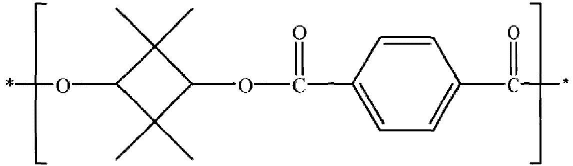
wherein * indicates the position where the unit is connected to the polymer chain,
for improving the odor rank of a thermoplastic composition comprising an aromatic polycarbonate and a polysiloxane-polycarbonate copolymer.

12. Use according to claim 11, wherein the polysiloxane-polycarbonate copolymer is the same as defined in any of claims 2-4.

13. Use according to claim 11 or 12, wherein the amorphous copolyester is present in amount ranging from 12 wt.% to 37 wt.%, preferably from 15 wt.% to 35 wt.% in the composition, relative to the total weight of the composition.

14. Use according to any of claims 11 to 13, the polysiloxane-polycarbonate copolymer is present in an amount ranging from 15 wt.% to 50 wt.%, preferably from 17.5 wt.% to 45 wt.%, relative to the total weight of the polycarbonate composition.

15. Use according to any of claim 11 to 14, wherein the amorphous copolyester comprises 10 wt.% to 90 wt.% of the cyclohexanedimethylene terephthalate repeating units and 10 wt.% to 90 wt.% of the 2,2,4,4-tetramethylcyclobutylene terephthalate repeating units, based on the weight of the copolyester.

## Patentansprüche

1. Thermoplastische Polycarbonatzusammensetzung, umfassend die folgenden Komponenten, bezogen auf das Gesamtgewicht der Zusammensetzung:
A) 24 - 70 Gew.-% eines aromatischen Polycarbonats, bei dem es sich nicht um ein Polysiloxan-Polycarbonat-Copolymer handelt,
B) 15 - 50 Gew.-% eines Polysiloxan-Polycarbonat-Copolymers und
C) 12 - 37 Gew.-% eines amorphen Copolyesters, umfassend 1,4-Cyclohexandimethylenterephthalat-Wiederholungseinheiten mit der Struktur 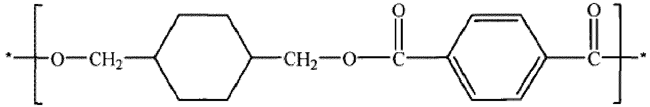 und 2,2,4,4-Tetramethyl-1,3-cyclobutylenterephthalat-Wiederholungseinheiten mit der Struktur 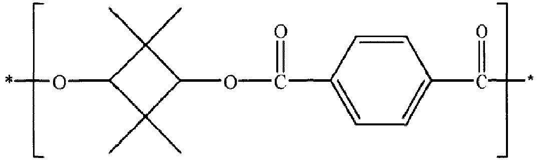 wobei * die Position anzeigt, an der die Einheit an die Polymerkette gebunden ist, und wobei der Gesamtgewichtsgehalt der Komponenten A)-C) nicht weniger als 95 Gew.-%, bezogen auf das Gesamtgewicht der Zusammensetzung, beträgt.

2. Zusammensetzung nach Anspruch 1, wobei das Polysiloxan-Polycarbonat-Copolymer Siloxanblöcke umfasst, die von (Poly)Siloxanen abgeleitet sind, die aus denjenigen der Formeln (2) und (3) ausgewählt sind: 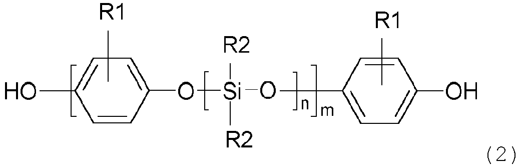 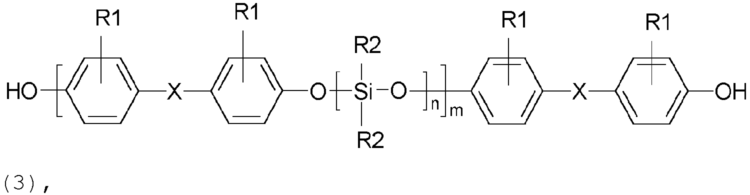
wobei R¹ für Wasserstoff, C₁- bis C₄-Alkyl, vorzugsweise für Wasserstoff oder Methyl und besonders bevorzugt für Wasserstoff steht,
R² unabhängig voneinander für Aryl oder C₁- bis C₄-Alkyl, vorzugsweise für Methyl, steht,
X für eine Einfachbindung, -SO₂-, -CO-, -O-, -S-, C₁- bis C₆-Alkylen, C₂- bis C₅-Alkyliden oder für C₆- bis C₁₂-Arylen, das gegebenenfalls mit weiteren Heteroatome enthaltenden aromatischen Ringen kondensiert sein kann, steht und X vorzugsweise für eine Einfachbindung, Isopropyliden, C₅- bis C₁₂-Cycloalkyliden oder Sauerstoff steht,
n eine durchschnittliche Zahl von 10 bis 400, vorzugsweise 10 und 100, besonders bevorzugt 15 bis 50, bedeutet und
m für eine durchschnittliche Zahl von 1 bis 10, vorzugsweise 1 bis 6 und besonders bevorzugt 1,5 bis 5, steht.

3. Zusammensetzung nach Anspruch 1 oder 2, wobei das Polysiloxan-Polycarbonat-Copolymer 2 Gew.-% bis 20 Gew.-% Siloxanblöcke, bezogen auf das Gewicht des Polysiloxan-Polycarbonat-Copolymers, umfasst.

4. Zusammensetzung nach Anspruch 3, wobei das gewichtsmittlere Molekulargewicht des Siloxanblocks 3000 bis 20.000 g/mol und vorzugsweise 3500 bis 15.000 g/mol beträgt, bestimmt durch Gelpermeationschromatographie und unter Verwendung eines BPA(Bisphenol A)-Polycarbonat-Standards.

5. Zusammensetzung nach einem der Ansprüche 1 bis 4, wobei das Polysiloxan-Polycarbonat-Copolymer in einer Menge im Bereich von 17,5 Gew.-% bis 45 Gew.-%, bezogen auf das Gesamtgewicht der Zusammensetzung, vorliegt.

6. Zusammensetzung nach einem der Ansprüche 1 bis 5, wobei der amorphe Copolyester 10 Gew.-% bis 90 Gew.-% der Cyclohexandimethylenterephthalat-Wiederholungseinheiten und 10 Gew.-% bis 90 Gew.-% der 2,2,4,4-Tetramethylcyclobutylenterephthalat-Wiederholungseinheiten, bezogen auf das Gewicht des Copolyesters, umfasst.

7. Zusammensetzung nach einem der Ansprüche 1 bis 6, wobei der amorphe Copolyester eine Schmelzvolumenrate (MVR) von 5 bis 30 g/mol, vorzugsweise von 8 bis 25 g/mol und besonders bevorzugt von 10 bis 20 g/mol aufweist, gemessen gemäß ISO 1133-1: 2011 bei 260 °C unter einer Belastung von 5 kg.

8. Zusammensetzung nach einem der Ansprüche 1 bis 7, wobei der Gesamtgewichtsgehalt der Komponenten A)-C) nicht weniger als 98 Gew.-%, bezogen auf das Gesamtgewicht der Zusammensetzung, beträgt.

9. Formkörper, hergestellt aus der Zusammensetzung nach einem der Ansprüche 1 bis 8.

10. Verfahren zur Herstellung des Formkörpers nach Anspruch 9, umfassend Spritzgießen, Extrudieren, Blasformen oder Thermoformen der Polycarbonatzusammensetzung nach einem der Ansprüche 1 bis 8.

11. Verwendung eines amorphen Copolyesters, umfassend 1,4-Cyclohexandimethylenterephthalat-Wiederholungseinheiten mit der Struktur 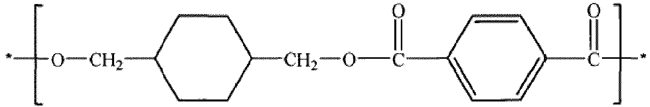 und 2,2,4,4-Tetramethyl-1,3-cyclobutylenterephthalat-Wiederholungseinheiten mit der Struktur 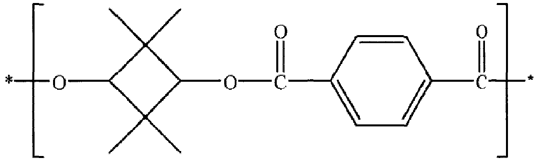
wobei * die Position anzeigt, an der die Einheit an die Polymerkette gebunden ist,
zur Verbesserung der Geruchsnote einer thermoplastischen Zusammensetzung, die ein aromatisches Polycarbonat und ein Polysiloxan-Polycarbonat-Copolymer umfasst.

12. Verwendung nach Anspruch 11, wobei das Polysiloxan-Polycarbonat-Copolymer der Definition in einem der Ansprüche 2-4 entspricht.

13. Verwendung nach Anspruch 11 oder 12, wobei der amorphe Copolyester in einer Menge im Bereich von 12 Gew.-% bis 37 Gew.-%, vorzugsweise von 15 Gew.-% bis 35 Gew.-%, bezogen auf das Gesamtgewicht der Zusammensetzung, in der Zusammensetzung vorliegt.

14. Verwendung nach einem der Ansprüche 11 bis 13, wobei das Polysiloxan-Polycarbonat-Copolymer in einer Menge im Bereich von 15 Gew.-% bis 50 Gew.-%, vorzugsweise von 17,5 Gew.-% bis 45 Gew.-%, bezogen auf das Gesamtgewicht der Zusammensetzung, vorliegt.

15. Verwendung nach einem der Ansprüche 11 bis 14, wobei der amorphe Copolyester 10 Gew.-% bis 90 Gew.-% der Cyclohexandimethylenterephthalat-Wiederholungseinheiten und 10 Gew.-% bis 90 Gew.-% der 2,2,4,4-Tetramethylcyclobutylenterephthalat-Wiederholungseinheiten, bezogen auf das Gewicht des Copolyesters, umfasst.

## Revendications

1. Composition de polycarbonate thermoplastique comprenant les composants suivants, par rapport au poids total de la composition :
A) 24 à 70 % en poids d'un polycarbonate aromatique qui n'est pas un copolymère polysiloxane-polycarbonate,
B) 15 à 50 % en poids d'un copolymère polysiloxane-polycarbonate, et
C) 12 à 37 % en poids d'un copolyester amorphe comprenant des motifs répétitifs de téréphtalate de 1,4-cyclohexanediméthylène ayant la structure 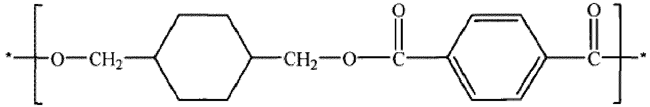 et des motifs répétitifs de téréphtalate de 2,2,4,4-tétraméthyl-1,3-cyclobutylène ayant la structure 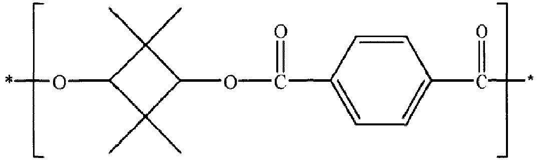 dans laquelle * indique la position où le motif est relié à la chaîne de polymère et dans laquelle la teneur totale en poids des composants A) à C) n'est pas inférieure à 95 % en poids, par rapport au poids total de la composition.

2. Composition selon la revendication 1, dans laquelle le copolymère polysiloxane-polycarbonate comprend des blocs de siloxane dérivés de (poly)siloxanes choisis parmi ceux de formules (2) et (3) 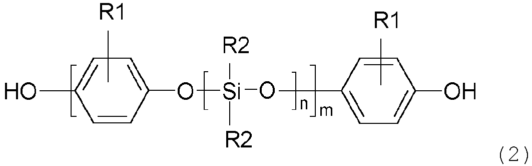 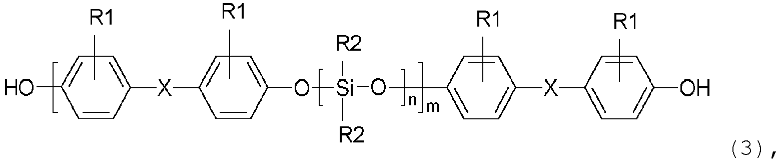
dans laquelle R¹ représente hydrogène, C₁- à C₄-alkyle, de préférence hydrogène ou méthyle et notamment de préférence hydrogène,
R² représente indépendamment l'un de l'autre aryle ou C₁-à C₄-alkyle, de préférence méthyle,
X représente une simple liaison, -SO₂-, -CO-, -O-, -S-, C₁- à C₆-alkylène, C₂- à C₅-alkylidène ou C₆- à C₁₂-arylène, qui peut éventuellement être condensé avec d'autres cycles aromatiques contenant des hétéroatomes, de préférence X représente une simple liaison, isopropylidène, cycloalkylidène en C₅ à C₁₂ ou oxygène,
n signifie un nombre moyen de 10 à 400, de préférence 10 et 100, notamment de préférence 15 à 50 et
m représente un nombre moyen de 1 à 10, de préférence 1 à 6 et notamment de préférence de 1,5 à 5.

3. Composition selon la revendication 1 ou 2, dans laquelle le copolymère polysiloxane-polycarbonate comprend 2 % en poids à 20 % en poids de blocs de siloxane, par rapport au poids du copolymère polysiloxane-polycarbonate.

4. Composition selon la revendication 3, dans laquelle le poids moléculaire moyen en poids du bloc siloxane est de 3 000 à 20 000 g/mole, et de préférence de 3 500 à 15 000 g/mole, déterminé par chromatographie à perméation de gel et en utilisant un standard de polycarbonate de BPA (bisphénol A).

5. Composition selon l'une quelconque des revendications 1 à 4, dans laquelle le copolymère polysiloxane-polycarbonate est présent en une quantité allant de 17,5 % en poids à 45 % en poids, par rapport au poids total de la composition.

6. Composition selon l'une quelconque des revendications 1 à 5, dans laquelle le copolyester amorphe comprend 10 % en poids à 90 % en poids des motifs répétitifs de téréphtalate de cyclohexanediméthylène et 10 % en poids à 90 % en poids des motifs répétitifs de téréphtalate de 2,2,4,4-tétraméthylcyclobutylène, sur la base du poids du copolyester.

7. Composition selon l'une quelconque des revendications 1 à 6, dans laquelle le copolyester amorphe a un indice de fusion volumique (MVR) de 5 à 30 g/mole, de préférence de 8 à 25 g/mole, et plus préférablement de 10 à 20 g/mole, mesuré selon la norme ISO 1133-1:2011 à 260 °C sous une charge de 5 kg.

8. Composition selon l'une quelconque des revendications 1 à 7, dans laquelle la teneur totale en poids des composants A) à C) n'est pas inférieure à 98 % en poids, par rapport au poids total de la composition.

9. Article façonné produit à partir de la composition selon l'une quelconque des revendications 1 à 8.

10. Procédé pour la préparation de l'article façonné selon la revendication 9, comprenant un moulage par injection, un moulage par extrusion, un moulage par soufflage ou un thermoformage de la composition de polycarbonate selon l'une quelconque des revendications 1 à 8.

11. Utilisation d'un copolyester amorphe comprenant des motifs répétitifs de téréphtalate de 1,4-cyclohexanediméthylène ayant la structure 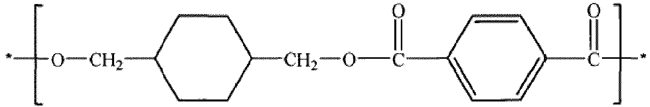 et motifs répétitifs de téréphtalate de 2,2,4,4-tétrméthyl-1,3-cyclobutylène ayant la structure 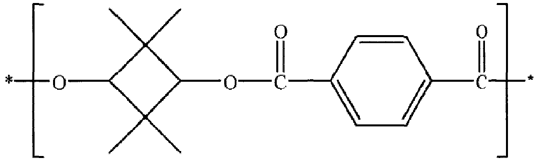
dans laquelle * indique la position où le motif est relié à la chaîne de polymère,
pour l'amélioration de l'odeur nauséabonde d'une composition thermoplastique comprenant un polycarbonate aromatique et un copolymère polysiloxane-polycarbonate.

12. Utilisation selon la revendication 11, dans laquelle le copolymère polysiloxane-polycarbonate est tel que défini dans l'une quelconque des revendications 2 à 4.

13. Utilisation selon la revendication 11 ou 12, dans laquelle le copolyester amorphe est présent en une quantité allant de 12 % en poids à 37 % en poids, de préférence de 15 % en poids à 35 % en poids dans la composition, par rapport au poids total de la composition.

14. Utilisation selon l'une quelconque des revendications 11 à 13, le copolymère polysiloxane-polycarbonate est présent en une quantité allant de 15 % en poids à 50 % en poids, de préférence de 17,5 % en poids à 45 % en poids, par rapport au poids total de la composition de polycarbonate.

15. Utilisation selon l'une quelconque des revendications 11 à 14, dans laquelle le copolyester amorphe comprend 10 % en poids à 90 % en poids des motifs répétitifs de téréphtalate de cyclohexanediméthylène et 10 % en poids à 90 % en poids des motifs répétitifs de téréphtalate de 2,2,4,4-tétraméthylcyclobutylène, sur la base du poids du copolyester.
